Europäisches Patentamt

(19) **European Patent Office**

**Office européen des brevets**

(11) Publication number: **0 008 207**
**B1**

(12) **EUROPEAN PATENT SPECIFICATION**

(45) Date of publication of patent specification: **02.12.81**

(21) Application number: **79301568.6**

(22) Date of filing: **03.08.79**

(51) Int. Cl.³: **A 01 N 25/28,**
**A 01 N 47/24**

(54) Insecticidal compositions, and preparation and use thereof.

(30) Priority: **03.08.78 US 930760**
**29.05.79 US 42191**

(43) Date of publication of application:
**20.02.80 Bulletin 80/4**

(45) Publication of the grant of the European patent:
**02.12.81 Bulletin 81/48**

(84) Designated Contracting States:
**AT BE DE FR IT LU NL**

(56) References cited:
**DE - A - 2 017 808**
**FR - A - 2 090 862**
**GB - A - 1 371 179**
**US - A - 3 577 515**

(73) Proprietor: **E.I. DU PONT DE NEMOURS AND**
**COMPANY**
**Legal Department 1007 Market Street**
**Wilmington, Delaware 19898 (US)**

(72) Inventor: **Roche, Robert Thomas**
**5 Marie Court Elmwood**
**Newark, Delaware 19713 (US)**

(74) Representative: **Hildyard, Edward Martin et al,**
**Frank B. Dehn & Co. Imperial House 15-19**
**Kingsway**
**London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 008 207

## Insecticidal Compositions, and Preparation and use thereof

This invention relates to insecticidal compositions and the preparation and use thereof. More particularly it relates to compositions containing methomyl.

Methomyl and oxamyl are known important insecticides. They are known chemically as: S-methyl N-[(methylcarbamoyl)oxythioacetamide] (methomyl) and S-methyl N,N'-dimethyl-N-[(methylcarbamoyl)oxyl-1-thiooxamimidate (oxamyl).

These insecticides have certain disadvantages, however. Methomyl controls boll weevil but is phytotoxic to cotton under some conditions. Methomyl also has short residual activity, i.e., it breaks down to nontoxic compounds in about three days; this is an advantage from the standpoint of environmental safety, but a disadvantage in that multiple applications are required for effective insect control. In addition, methomyl and oxamyl are toxic to mammals, and they require careful handling and use.

A technique for reducing the mammalian toxicity and phytotoxicity and increasing the residual activity of methyl and ethyl parathion insecticides is taught in U.S. Patent Specification No. 3,959,464. The technique involves encapsulating the insecticide within a wall of cross-linked polyamide-polyurea by emulsifying the liquid insecticide and polyfunctional monomer (acid chloride or isocyanate) in water, adding complementary monomer and permitting the monomers to react to form the cross-linked polyamide polyurea. The resulting microcapsules range in average particle size from about 30 to 130 microns and contain a weight ratio of pesticide to polymer in the range of 2:1 to 10:1. The technique of U.S. Patent Specification No. 3,959,464 is not useful for encapsulating methomyl and oxamyl because these materials, unlike the parathions, are solids at room temperature. Moreover, both methomyl and oxamyl are water soluble solids, which does not allow for their emulsification in an aqueous phase.

In Example XII of British Patent Specification No. 1,371,179, a process is disclosed involving encapsulation of a solid insecticide by dissolving it and a mixture of isocyanates in naphtha, addition of this solution to water and agitation to form an emulsion. A portion of the isocyanate hydrolyzes to amine which then reacts with isocyanate to form a polyurea encapsulating shell. A disadvantage of this procedure is that the naphtha solvent is encapsulated along with the insecticide, reducing the proportion of insecticide and creating other problems in handling, packaging, storage and use of the product.

U.S. Patent Specification No. 3,796,669 (equivalent to French Patent Specification No. 2,090,862) discloses a method of making oil-containing microcapsules wherein the wall-forming materials and the catalyst are incorporated into the oil liquid to be encapsulated in combination with a low boiling solvent, e.g. methylene chloride, or a polar solvent, prior to emulsification in a polar liquid (e.g. water), immiscible with said oily liquid and which forms the continuous phase. During the manufacture of the microcapsule, the low boiling solvent is released into the continuous phase as a result of an increase in temperature. This takes place prior to the formation of the capsule with the result that little low boiling solvent is maintained in the capsule.

According to the invention, we provide substantially solvent-free microcapsules comprising from 10 to 75% by weight of the micro-capsules of an insecticide selected from methomyl, oxamyl and mixtures of methomyl with an insecticide selected from oxamyl, aldicarb, diflubenzuron, chlordimeform, parathion-methyl, parathion, EPN, fenvalerate, permethrin, decamethrin, cypermethrin, carbaryl, and leptophos, and an outer encapsulating wall of cross-linked polyurea.

The chemical names of the insecticides in the preceding paragraph, other than methomyl and oxamyl, are:—

*Aldicarb:*
2-Methyl-2(methylthio)propionaldehyde O-methylcarbamoyloxime
*Diflubenzuron:*
1-(4-Chlorophenyl)-3-(2,6-difluorobenzoyl)urea
*Chlordimeform:*
$N^2$-(4-Chloro-o-tolyl)-$N^1$, $N^1$-dimethylformamidine
*Parathion-methyl:*
O,O-Dimethyl O-(4-nitrophenyl)phosphorothioate
*Parathion:*
O,O-Diethyl O-(4-nitrophenyl)phosphorothioate
*EPN:*
O-Ethyl-O-(4-nitrophenyl)-phenylphosphonothioate
*Fenvalerate:*
(RS)-$\alpha$-Cyano-3-phenoxybenzyl (RS)-2-(4-chlorophenyl)-3-methylbutyrate
*Permethrin:*
3-Phenoxybenzyl-(1RS)-*cis, trans*-3(2,2-dichlorovinyl)-2,2-dimethylcyclopropanecarboxylate
*Decamethrin:*
(S)-$\alpha$-Cyano-3-phenoxybenzyl(1R)-*cis*-3-(2,2-dibromovinyl)-2,2-dimethylcyclopropanecarboxylate
*Cypermethrin:*

2

0 008 207

(RS)-α-Cyano-3-phenoxybenzyl   (1RS)-*cis,trans*-3-(2,2-dichlorovinyl)-2,2-dimethylcyclopropanecarboxylate

*Carbaryl:*
1-Naphthalenyl methylcarbamate

*Leptophos:*
O-4-Bromo-2,5-dichlorophenyl O-methylphenylphosphonothioate.

The microcapsules can be prepared by (a) dissolving methomyl, oxamyl or mixtures of methomyl with other insecticides from the above list in methylene chloride containing a polyisocyanate or a mixture of polyisocyanate with diisocyanate, (b) emulsifying the solution into a cooled aqueous surfactant solution, (c) adding a diamine or polyamine or a mixture of the two to form a cross-linked polyurea encapsulating shell around droplets of the emulsified solution and (d) removing the methylene choride.

Methylene chloride, which is used as the solvent in preparing the microcapsules of this invention, has a higher volatility than the active ingredients and will unexpectedly pass through the polyurea encapsulating wall with no damage to the wall. Thus, the insecticide microcapsules of this invention are substantially solvent-free. The terms "substantially solvent-free" and "solvent free" as used herein mean that the microcapsules contain not more than 1% by weight of solvent.

A solvent-free product has distinct advantages over the naphtha solution encapsulated products known in the art. The solvent-free microcapsules contain a higher concentration of active ingredient, and they are easier and safer to package and handle. Hence, there is less danger of toxicity to humans, and the product is easier to apply to crops.

## DETAILED DESCRIPTION OF THE INVENTION

The microcapsules of this invention may be prepared by the following process:

A. A methylene chloride solution A is prepared containing:

(1)   10—50 weight percent of active ingredient, methomyl, oxamyl or a mixture of methomyl and an insecticide selected from oxamyl, aldicarb, diflubenzuron, chlordimeform, parathion methyl, parathion, EPN, fenvalerate, permethrin, decamethrin, cypermethrin, carbaryl, and leptophos. Methomyl and oxamyl are preferred as active ingredients. Any desired ratio of active ingredients may be used if mixtures thereof are to be encapsulated.

(2)   0—30 Weight percent of the final microcapsule weight of a methylene chloride soluble inert polymer, e.g., polymethylmethacrylate, polystyrene, styrene copolymer or methylmethacrylate copolymers, etc.

(3)   A polyisocyanate or a mixture of a polyisocyanate with a diisocyanate. Preferred is a mixture of an aromatic diisocyanate with a polyisocyanate, and the preferred diisocyanate is 2,4-toluene diisocyanate.

The term polyisocyanate as used herein means an organic compound having at least three functional isocyanate groups. Preferred for use in this invention are aromatic polyisocyanates such as polymethylene polyphenylisocyanate,
        also written as polymethylene phenyl isocyanate-PAPI® (Upjohn Co.);
        triphenylmethane-4,4′,4″-triisocyanate.

Examples of suitable diisocyanates are:

        2,4-toluene diisocyanate
        2,6-toluene diisocyanate
        mixtures of 2,4- and 2,6-toluene diisocyanates
        hexamethylene diisocyanate
        para-phenylene diisocyanate
        meta-phenylene diisocyanate
        naphthalene-1,5-diisocyanate
        tetrachloro-m-phenylene diisocyanate
        dichlorodiphenyl methane diisocyanate
        4,4-diphenyl diisocyanate
        bitolylene diisocyanate
        diphenylether diisocyanates
        dimethyl diphenyl diisocyanates.

When a diisocyanate is used, the quantity of polyisocyanate will most desirably be at least 10 mole percent based on diisocyanate. Preferred is 10 to 25 mole percent of polyisocyanate based on diisocyanate.

The total quantity of isocyanate (diisocyanate plus polyisocyanate) should be such that the concentration of insecticide in the final microcapsules is about 10 to 75% by weight, preferably 20—55% by by weight.

B. The solution A is added to a cooled (0—15°C) aqueous solution B of a suitable surfactant or mixture of surfactants, such as polyvinyl alcohols. The surfactant emulsifies A into B and maintains the dispersion while polymerization (Step C) occurs to form the walls of the microcapsule. The amount of surfactant needed can be determined by those skilled in the art, but the surfactant must be present in sufficient quantities to form the desired emulsion. The volume ratio of A to B is such that A is 30—50 volume percent of A + B. The upper limit of the volume percent range of A is determined by the need to maintain an oil-in-water emulsion, avoiding an emulsion inversion. The mixture of A and B is agitated in order to form an emulsion containing the desired particle size (5—150 $\mu$) of droplets; preferably 10—50 $\mu$. Larger droplets of 150—750 $\mu$ particle size can also be prepared depending on the end use of the microcapsule formulation.

C. To the A + B emulsion at 0—15°C is added a diamine (0—100 weight percent of total amine) such as ethylenediamine, or a polyamine (0—100 weight percent of total amine) such as diethylenetriamine, or a mixture of di- and polyamine.

The term polyamine as used herein means an aliphatic amine having at least three primary or secondary amine groups, such as

              diethylenetriamine
              triethylenetetramine
              tetraethylenepentamine
              pentaethylenehexamine.

The term diamine means an aliphatic amine having two primary or secondary amine groups, such as

              ethylenediamine
              hexamethylenediamine
              piperazine
              tetramethylenediamine.

Either a polyamine or a diamine can be used, but it is preferred that the amine component be 50—100 mole percent diamine and 0—50 mole percent polyamine. In the most preferred embodiment of this invention, the amine component should be 75—85 mole percent diamine and 15—25 mole percent polyamine. During polymerization, the temperature is maintained at 0—35°C. The amine can be added as such, but it is preferably added as an aqueous solution containing at least 20 weight percent amine. The ratio of amines to isocyanate is 95—300 mole percent, preferably 110—200 mole percent. After polymerization is complete, the excess amine can be neutralized to a range of pH 5—8 with acid such as hydrochloric or phosphoric acid to avoid base decomposition of any methomyl or oxamyl present in the aqueous phase.

D. The polymerization step yields the desired insecticide microcapsules, which also contain methylene chloride. At this point, the polyurea polymer encapsulating wall is swollen and tacky, and the particles, i.e., microcapsules, tend to adhere to one another which makes isolation thereof very difficult. Therefore, the methylene chloride must be removed from the microcapsules, and this may be accomplished by passing an air or nitrogen stream over the surface of the slurry from step C or by applying a vacuum thereto. Quite unexpectedly, the methylene chloride will pass through the microcapsule wall without damaging the polyurea. The insecticidal core remains intact within the encapsulating wall.

E. The microcapsules, usually about 5—150 $\mu$ in size, can be isolated by conventional techniques, e.g., concentration or filtration and then washed with water.

In some instances, it may be desirable to eliminate the isolation step and use the product as it is or diluted with water or additional materials, such as thickeners to improve formulation characteristics.

Methomyl has a high degree of contact activity when applied topically to insects. Some of this activity may be lost if the methomyl is encapsulated and not available to contact the outer surface of an insect. Therefore, it may be desirable to mix some unencapsulated methomyl with the microencapsulated methomyl formulation to impart the contact insecticidal activity. Also, to impart other desired insecticidal effects, it may be desirable to mix methomyl microcapsules with other insecticides such as diflubenzuron, chlordimeform, fenvalerate, permethrin, decamethrin, cypermethrin or parathion methyl microcapsules (prepared as taught in U.S. Patent Specification No. 3,959,464). Such compositions comprise a further feature of the invention.

The following examples are illustrative of the instant invention. Unless otherwise indicated, all parts are by weight and all temperatures in °C.

In all examples, the surfactant used was a polyvinylalcohol, Elvanol® 50—42 (E. I. du Pont de Nemours & Co.), which was prepared as a 0.5% aqueous solution by dissolving in water using an Osterizer blender.

As used herein, the terms "cross-linked polyurea" and "cross-linked polyurea polymer" mean a polymer of repeating ureido groups with linkages between adjacent polymer chains formed by the reaction of amine and isocyanate functionality not used in linear chain growth. Cross-linking in condensation polymerization is generally achieved by using polymerizable compounds containing more than two functional groups, e.g., triamines and triisocyanates in the case of cross-linked polyureas.

### Example 1

The following solutions were prepared:

A. Organic phase which was prepared just prior to use.

| 15 ml | methylene chloride |
| 15 g | methomyl |
| 2.6 ml | 2,4-toluene diisocyanate |
| 0.7 g | PAPI® polymethylene polyphenylisocyanate |

B. Aqueous phase

| 60 ml | 0.5% aqueous Elvanol® 50—42 polyvinyl alcohol solution |

C. Amine solution of

| 20 ml | water |
| 3.6 ml | ethylenediamine |
| 1.4 ml | diethylenetriamine. |

To a 250 ml Erlenmeyer flask equipped with a magnetic stirrer, was added 60 ml of 0.5% polyvinyl alcohol solution B. After cooling solution B in an ice bath to about 5°C, the organic phase, solution A, was added with vigorous stirring. This mixture was stirred for 30 seconds to form a stable emulsion, whereupon the previously chilled amine solution C was added (with temperature control <15°C) and the stirring rate slowed. The resulting slurry of microcapsules was allowed to warm to room temperature and was stirred at ambient temperature overnight with an air stream passing over the surface to remove methylene chloride.

The microcapsules were isolated by first centrifuging to remove supernatant liquid, washing with water and filtering. The resulting tan powder was allowed to dry on the funnel. The isolated powder, 10.0 g, was screened through a 60 mesh sieve. Elemental sulfur analysis indicated a methomyl concentration of 53.5%, with the balance cross-linked polyurea polymer. Less than 0.2% methylene chloride as determined by elemental chlorine analysis was present. The particle size of the microcapsules was 30—70 $\mu$, as determined by microscopic investigation.

### Example 2

In this example an inert polymer, poly(methy methacrylate), Elvacite® 2010 (E. I. du Pont de Nemours & Co.), was added to the organic phase. The following solutions were prepared:

A. Organic phase

| 20 ml | methylene chloride |
| 4.2 g | Elvacite® 2010 |
| 17 g | methomyl |
| 2.6 ml | 2,4-toluene diisocyanate |
| 1.8 g | PAPI® |

B. Aqueous phase

| 50 ml | 0.5% aqueous Elvanol® 50—42 |

C. Amine solution of

| 10 ml | water |
| 3.6 ml | ethylenediamine |
| 1.4 ml | diethylenetriamine. |

## 0 008 207

The same procedure as in Example 1 was followed. 17.2 g of microcapsules were isolated which were analyzed by elemental sulfur analysis to be 48% methomyl and which contained less than 0.2% methylene chloride as determined by elemental chloride analysis. The particle size was 30—70 $\mu$ as determined by microscopic investigation.

### Example 3

In this example, polystyrene (Shell 314) was used as added inert polymer to the organic phase. The following solutions were prepared:

A.  Organic phase

| 20 ml | methylene chloride |
| 4.2 g | polystyrene (Shell 314) |
| 17 g | methomyl |
| 2.6 ml | 2,4-toluene diisocyanate |
| 1.0 g | PAPI® |

B.  Aqueous phase

| 60 ml | 0.5% aqueous Elvanol® 50—42 |

C.  Amine solution of

| 10 ml | water |
| 3.6 ml | ethylenediamine |
| 1.4 ml | diethylenetriamine |

The same procedure as in Example 1 was followed to give 16.0 g of isolated microcapsules which analyzed by sulfur analysis to be 27.8% methomyl and contained <0.2% methylene chloride as determined by elemental chlorine analysis. The particles size was 30—70 $\mu$ as determined by microscopic investigation.

### Example 4

The following solutions were prepared:

A.  Organic Phase

| 90 ml | methylene chloride |
| 90 g | methomyl |
| 46.2 ml | 2,4-toluene diisocyanate |
| 21.6 g | PAPI® |

B.  Aqueous phase

| 290 ml | 0.5% aqueous Elvanol® 50—42 |

C.  Amine solution of

| 50 ml | water |
| 40.8 ml | ethylenediamine |
| 16.6 ml | diethylenetriamine. |

To a 500 ml baffled resin kettle was added 290 ml of solution B. After cooling to 15°C in an ice bath, the organic phase, solution A, was added with vigorous stirring. After stirring for 2 minutes, the stirring rate was slowed and previously chilled solution C was added. The temperature of the

6

mixture quickly rose to 32°C and slowly cooled over a 30-minute period. The ice bath was removed and an air stream passed over the surface of the slurry for 6 hours to remove methylene chloride.

The microcapsules were isolated by centrifuging to remove supernatant liquid, redispersing in 150 ml of water, filtering and air drying to give 149.0 g of a tan powder containing 41.9% methomyl with a particle size range of 10—40 $\mu$ with an average size of 21 $\mu$, as determined by Coulter Counter.

Example 5

In this example, an 80/20 mixture by weight of 2,4- and 2,6-toluene diisocyanate, Hylene ®TM (E. I. du Pont de Nemours & Co.) was used as the diisocyanate. The following solutions were prepared.

A. Organic phase

| | |
|---|---|
| 15 ml | methylene chloride |
| 15 g | methomyl |
| 5.2 ml | 80/20 mixture of 2,4- and 2,6-toluene diisocyanate |
| 1.4 g | PAPI ® |

B. Aqueous phase

| | |
|---|---|
| 50 ml | 0.5% aqueous Elvanol ® 50—42 |

C. Amine solution of

| | |
|---|---|
| 10 ml | water |
| 7.2 ml | ethylenediamine |
| 2.8 ml | diethylenetriamine. |

To a 500 ml baffled resin kettle was added 50 ml of solution B. After cooling to 10°C in an ice bath, the organic phase, solution A, was added with vigorous stirring. After stirring for 45 seconds the stirring rate was slowed and previously chilled solution C was added. After stirring the resulting slurry for 30 minutes, an air stream was passed over the surface for 2 hours to remove methylene chloride.

The microcapsules were isolated as in the previous examples to give 13.2 of a tan powder which analyzed as 44.9% methomyl by liquid chromatography. The average particle size was 18—20 $\mu$ as determined by microscopic investigation.

*Formulation*

Useful formulations of the microcapsules described in the previous examples can be prepared as wettable powders or aqueous suspensions in conventional ways. These sprayable formulations can be extended in suitable media and used at spray volumes of from a few pints to several hundred gallons per acre. High strength compositions are used primarily as intermediates for further formulation. The formulations, broadly, contain about 10% to 99% by weight of microcapsules and at least one of (a) about 1% to 20% surfactant(s) and (b) about 9% to 99% solid or liquid inert diluent(s). More specifically, they will contain these ingredients in the following approximate proportions:

| | Percent by Weight* | | |
|---|---|---|---|
| | Microcapsule | Diluent(s) | Surfactant(s) |
| Wettable Powder | 19—99 | 0—80 | 1—10 |
| Aqueous Suspensions | 10—60 | 30—89 | 1—20 |

\* Weight of microcapsule plus at least one of a Surfactant or Diluent equals 100 weight percent.

Higher ratios of surfactant to active ingredient are sometimes desirable, and are achieved by incorporation into the formulation or by tank mixing.

Typical solid diluents are described in Watkins et al., "Handbook of Insecticide Dust Diluents and Carriers", 2nd Edn., Dorland Books, Caldwell, N.J. The more finely divided diluents are preferred for the wettable powders of this invention. Water is the preferred liquid diluent, but may contain other watersoluble materials such as alcohols, glycols or ketones to provide improved freeze resistance, for example, methanol, ethanol, propylene glycol, acetone, or the like. "McCutcheon's Detergents and Emulsifiers Annual", McCutcheon Division, MC Publishing Co., Ridgewood, New Jersey, as well as Sisely and Wood, "Encyclopedia of Surface Active Agents", Chemical Publ. Co., Inc., New York, 1964, list surfactants and recommended uses. All formulations can contain minor amounts of additives to reduce foam, caking, corrosion, microbiological growth, etc., or to buffer the pH.

The methods of making such compositions are well known. Fine solid compositions are made by blending.

Aqueous suspensions may be obtained directly from the encapsulation slurry without isolation of the dried microcapsules by warming and/or passing air or nitrogen through the slurry to remove methylene chloride. Any additionally desired diluents or surfactants may then be added.

Those skilled in the art of formulations will recognize that the above formulations are only examples of representative formulations and other product forms are possible.

In the following examples, ingredient proportions are by weight.

### Example 6

*Wettable Powder*

| | |
|---|---|
| Methomyl microcapsule | 40% |
| Dioctyl sodium sulfosuccinate | 1.5% |
| Sodium lignin sulfonate | 3% |
| Low viscosity methyl cellulose | 1.5% |
| Attapulgite | 54% |

The ingredients are thoroughly blended and sifted through a U.S.S. No. 50 sieve (0.3 mm opening) before packaging. If desired all ingredients except the microcapsules may be ground in a hammer or fluid energy mill to reduce the particle size of these components. The microcapsules can then be blended into this ground premix.

### Example 7

*Wettable Powder*

| | |
|---|---|
| Methomyl microcapsule | 96% |
| Sodium alkylnaphthalene sulfonate | 2% |
| Sodium ligninsulfonate | 2% |

The ingredients are thoroughly blended and sifted through a U.S.S. No. 50 sieve (0.3 mm opening) before packaging.

*Use*

The microcapsules of this invention are useful in agriculture for control of insects and nematodes which are controlled by methomyl, oxamyl and mixtures of methomyl with other insecticides listed previously. As demonstrated in the following examples, improved residual insecticidal and nematicidal properties as well as decreased phytotoxicity are obtained with controlled release methomyl microcapsules.

The insects are controlled by applying microcapsules to the locus of infestation, to the area to be protected, or to the pests themselves. For the control of insects on agricultural crops, the microcapsules are generally applied to the foliage of other plant parts which are infested or which are to be protected. Effective amounts to be applied depend upon the specific compound used, the species to be controlled, its life stage, its size and location, the amount of rainfall, the time of year, moisture, temperature, type of application, plant spacing, and other variables. In general, .05 to 10 Kg of active ingredient per ha may be required for insect control in agriculture with rates of 0.15 to 5 Kg/ha usually being sufficient. In large scale field operations, rates in the range of 0.25 to 3 kg/ha are generally used.

Nematodes are controlled by applying the microcapsules to the locus of infestation, to the area to be protected or to the pest themselves. For the control of nematodes in agricultural crops, a microcapsule formulation of this invention is generally applied to a portion of the plant or surrounding soil which is infested or which is to be protected. Effective amounts to be applied depend upon the species to be controlled, its life stage, it size and location, the amount of rainfall, the time of year, moisture, temperature, soil type, percentage of area treated, type of application, and other variables. In general, 3 to 30 Kg of active ingredient per ha may be required for nematode control in agriculture with rates of 5 to 10 Kg/ha usually being sufficient in many situations.

The methomyl microcapsules possess significant advantages over prior art compounds. For example, their improved residual insecticidal and nematicidal activity can reduce the need for closely spaced multiple applications resulting in greater economy to the grower and dissemination of less pesticide in the environment. There is also less chance that the pesticide applied in this manner will be damaging to plants. A specific advantage of this type is the reduced side-effect on cotton. Treated leaves remain green and free of reddening that may result when the same pesticides are applied in other forms.

The microcapsules of this invention can be mixed with fungicides, bactericides, acaricides, as well as other nematicides, insecticides, or other biologically active compounds in order to achieve desired results with a minimum expenditure of time, effort and material. Amounts of these biologically active materials added for each part by weight of the composition of this invention may vary from 0.05 to 25 parts by weight.

The microcapsules of this invention can also be mixed with unencapsulated methomyl, oxamyl or other insecticide or nematicide, to obtain enhanced effect, immediately upon application, with the improved residual insecticidal or nematicidal activity which derives from the encapsulation. Such mixtures may be in the form of combined single-package products, or they may be accomplished in the spray tank, by tank-mixing. The ratio of unencapsulated active ingredient can vary widely but would usually be from 1:10 to 10:10.

Example 8

The foliage of red kidney bean plants in the two-leaf stage was sprayed to run-off with dispersions of microcapsules of this invention at various concentrations. Dispersions were prepared by diluting appropriately weighed quantities of the microcapsules to 100 ml with water containing surface active agent, sodium lauryl sulfate (Duponol®C) (E. I. du Pont de Nemours & Co.) at 1:5000. After drying, the plants were placed under artificial light in a room maintained at 25 ± 2°C, 54 ± 5% RH. Two days thereafter, leaves were excised from the plants and placed in covered 10 cm petri dishes along with moist filter paper to keep them fresh. Ten southern armyworm larvae were placed in each dish. Tests were run in duplicate. The units were kept in a room maintained at 25 ± 2°C, 54 ± 5% RH. Mortality results were recorded two days thereafter. Seven days after the plants had been dried and placed in the relative humidity room, additional leaves were excised from the plants and tested in the same manner as those excised after two days.

| Microcapsule Formulation | Active Ingredient* Concentration in Spray % | % Larvae Dead | |
|---|---|---|---|
| | | 2 days | 7 days |
| Example 1 | 0.01 | 100 | 100 |
| | 0.005 | 85 | 95 |
| Example 2 | 0.01 | 100 | 100 |
| | 0.005 | 90 | 95 |
| Example 3 | 0.01 | 100 | — |
| | 0.005 | 95 | — |
| Example 4 | 0.01 | 100 | 100 |
| | 0.005 | 100 | 100 |
| Example 5 | 0.01 | 100 | 100 |
| | 0.005 | 100 | 100 |
| Untreated Control | — | 0 | 0 |
| Unencapsulated methomyl | 0.01 | 5 | 0 |

* Active ingredient refers to the methomyl concentration in the spray.

9

## Example 9

Potted cotton plants approximately 30 cm high having 5—6 true leaves were sprayed to run-off with aqueous dispersions of the following microcapsule formulations of this invention at 500 ppm. The sprays contained surface active agent (Duponol® C) at a concentration of 1:500. Other sets of plants were similarly treated with methomyl. After drying, plants were set out in the greenhouse and held for observation.

| Microcapsule Formulation (500 ppm AI)[1] | Rating[2] (8 days) |
|---|---|
| *Test A* | |
| Example 1 | 0 |
| Example 3 | 3R |
| Unencapsulated Methomyl | 5R |
| Untreated Control | 0 |
| *Test B* | |
| Example 2 | 0.2R |
| Unencapsulated Methomyl | 4R |
| Untreated Control | 0 |
| *Test C* | |
| Example 4 | 0 |
| Unencapsulated Methomyl | 3R |
| Untreated Control | 0 |
| *Test D* | |
| Example 5 | 0.25R |
| Unencapsulated Methomyl | 4R |
| Untreated Control | 0 |

[1] AI — active ingredient (methomyl)
[2] "R" denotes typical methomyl effect, i.e., reddening of older leaves, slight puckering and black stippling of younger leaves. Rating is on the basis of 0 to 10, with 10 indicating total leaf area involvement.

## Claims

1. Substantially solvent-free microcapsules comprising from 10 to 75% by weight of the microcapsules of an insecticide selected from methomyl, oxamyl and mixtures of methomyl and an insecticide selected from oxamyl, aldicarb, diflubenzuron, chlordimeform, parathion-methyl, parathion, EPN, fenvalerate, permethrin, decamethrin, cypermethrin, carbaryl and leptophos within an encapsulating wall of cross-linked polyurea.

2. Microcapsules as claimed in claim 1 which contains 20—55% by weight insecticide.

3. Microcapsules as claimed in claim 1 or claim 2 wherein the microcapsules are 5—150 $\mu$ in average particle size.

4. Microcapsules as claimed in any of claims 1 to 3 in which the insecticide is methomyl or oxamyl.

5. Microcapsules as claimed in any of claims 1 to 4 in which the core contains a methylene chloride soluble inert polymer in an amount of up to about 30% by weight of total microcapsule weight.

6. Microcapsules as claimed in claim 5 in which the inert polymer is selected from polymethylmethacrylate and polystyrene.

7. An insecticidal composition which comprises microcapsules of any of claims 1 to 6 in admixture with an unencapsulated insecticide in a ratio of from 1:10 to 1:1.

8. A composition as claimed in claim 7 wherein the unencapsulated insecticide is methomyl.

9. A composition as claimed in any of the preceding claims comprising from 10—99% by weight of microcapsules as defined in claim 1 and at least one of (a) from 1% to 20% surfactant(s) and (b) from 9 to 99% of solid or liquid inert diluent(s), all percentages being by weight.

10. A process for preparing microcapsules as claimed in claim 1 including the steps of (a) dissolving methomyl, oxamyl, or a mixture of methomyl and an insecticide selected from the group oxamyl, aldicarb, diflubenzuron, chlordimeform, parathion-methyl, parathion, EPN, fenvalerate, permethrin, decamethrin, cypermethrin, carbaryl and leptophos in methylene chloride containing polyisocyanate or a mixture of a polyisocyanate and diisocyanate, (b) emulsifying the solution into a cooled aqueous surfactant solution, (c) adding a diamine or polyamine or a mixture of the two to form a cross-linked polyurea encapsulated shell around droplets of the emulsified solution, and (d) removing the methylene chloride.

11. A process as claimed in claim 10 wherein the methylene chloride solution in step (a) contains diisocyanate in addition to polyisocyanate and a mixture of diamine and polyamine is added to the emulsion in step (c).

12. A process as claimed in claim 10 or claim 11 wherein the concentration of polyisocyanate is 10 to 25 mole percent based on diisocyanate and the concentration of polyamine is 15—25% mole percent based on total amine.

13. A process as claimed in any of claims 10—12 wherein both the diisocyanate and polyisocyanate are aromatic isocyanates.

14. A process as claimed in any of claims 10—13 wherein the diisocyanate is 2,4-toluene diisocyanate and the polyisocyanate is polymethylenepolyphenyl isocyanate.

15. A process as claimed in any of claims 10—14 wherein the diamine is ethylenediamine and the polyamine is diethylene triamine.

16. A process as claimed in any of claims 10—15 wherein the reaction temperature is 0—35°C.

17. A method of controlling an insect pest by applying to the locus of said pest an effective amount of an insecticidal composition characterised in that said insecticidal composition comprises the microcapsules of any of claims 1 to 9.


**Revendications**

1. Microcapsules pratiquement exemptes de solvant, comprenant 10 à 75%, sur le poids des microcapsules, d'un insecticide choisi entre le méthomyl, l'oxamyl et les mélanges de méthomyl et d'un insecticide choisi entre l'oxamyl, l'aldicarbe, le diflubenzurone, le chlordiméforme, le parathion, le méthylparathion, l'EPN, le fenvalérate, la perméthrine, la décaméthrine, la cyperméthrine, le carbaryl et le leptophos, à l'intérieur d'une paroi d'encapsulation en polyurée réticulée.

2. Microcapsules selon la revendication 1, qui contiennent 20 à 55% en poids d'insecticide.

3. Microcapsules selon la revendication 1 ou 2, dans lesquelles les microcapsules ont une grosseur moyenne de particules de 5 à 150 $\mu$m.

4. Microcapsules selon la revendications 1, 2 ou 3, dans lesquelles l'insecticide est le méthomyl ou l'oxamyl.

5. Microcapsules selon l'une quelconque des revendications précédentes, dans lesquelles le coeur contient un polymère inerte soluble dans le chlorure de méthylène, en quantité allant jusqu'à environ 30% en poids sur le poids total de la microcapsule.

6. Microcapsules selon la revendication 5, dans lesquelles le polymère inerte est le polyméthacrylate de méthyle ou le polystyrène.

7. Composition insecticide qui comprend des microcapsules selon l'une quelconque des revendications précédentes, en mélange avec un insecticide non encapsulé, en un rapport compris entre 1:10 et 1:1.

8. Composition selon la revendication 7, dans laquelle l'insecticide non encapsulé est le méthomyl.

9. Composition selon l'une quelconque des revendications précédentes, comprenant 10 à 99% en poids de microcapsules telles que définies à la revendication 1 et au moins un des ingrédients suivants: (a) 1 à 20% de surfactif(s) et (b) 9 à 99% diluant(s) inerte(s) solide(s) ou liquide(s), tous les pourcentages étant en poids.

10. Procédé de préparation de microcapsules selon la revendication 1, comprenant les étapes suivantes: (a) dissoudre du méthomyl, de l'oxamyl ou un mélange de méthomyl et d'un insecticide choisi dans le groupe comprenant l'oxamyl, l'aldicarbe, le diflubenzurone, le chlordiméforme, le parathion, le méthylparathion, l'EPN, le fenvalérate, la perméthrine, la décaméthrine, la cyperméthrine, le carbaryl et le leptophos, dans du chlorure de méthylène contenant du polyisocyanate ou un mélange d'un polyisocyanate et d'un diisocyanate, (b) émulsifier la solution dans une solution aqueuse refroidie de surfactif, (c) ajouter une diamine ou une polymamine ou un mélange des deux pour former une coque d'encapsulation en polyurée réticulée autour de gouttelettes de la solution émulsifiée et (d) éliminer le chlorure de méthylène.

11. Procédé selon la revendication 10, dans lequel la solution de chlorure de méthylène, à l'étape (a), contient du diisocyanate en plus de polyisocyanate et l'on ajoute un mélange de diamine et de polyamine à l'émulsion à l'étape (c).

12. Procédé selon la revendication 10 ou la revendication 11, dans lequel la concentration de polyisocyanate est de 10 à 25 mol% relativement au diisocyanate et la concentration de polyamine est de 15 à 25 mol% relativement à l'amine totale.

13. Procédé selon la revendication 10, 11 ou 12, dans lequel le diisocyanate et le polyisocyanate sont tous deux des isocyanates aromatiques.

14. Procédé selon l'une quelconque des revendications 10 à 13, dans lequel le diisocyanate est le diisocyanate de 2,4-toluène et le polyisocyanate est l'isocyanate de polyméthylènepolyphényle.

15. Procédé selon l'une quelconque des revendications 10 à 14, dans lequel la diamine est l'éthylènediamine et la polyamine est la diéthylènetriamine.

16. Procédé selon l'une quelconque des revendications 10 à 15, dans lequel la température de réaction est de 0 à 35°C.

17. Procédé pour maîtriser un insecte nuisible en appliquant au lieu d'infestation une quantité efficace d'une composition insecticide, caractérisé par le fait que cette composition insecticide comprend les microcapsules selon l'une quelconque des revendications 1 à 9.

## Patentansprüche

1. Im wesentlichen Lösungsmittel-freie Mikrokapseln, umfassend 10 bis 75 Gew.-%, bezogen auf das Gewicht der Mikrokapseln, eine Insektizides, ausgewählt unter Methomyl, Oxamyl und Mischungen von Methomyl und einem Insektizid, ausgewählt unter Oxamyl, Aldicarb, Diflubenzuron, Chlordimeform, Parathion-Methyl, Parathion, EPN, Fenvalerat, Permethrin, Decamethrin, Cypermethrin, Carbaryl und Leptophos, innerhalb einer einkapselnden Wandung von vernetztem Polyharnstoff.

2. Mikrokapseln nach Anspruch 1, welche 20 bis 55 Gew.-% Insektizid enthalten.

3. Mikrokapseln nach Anspruch 1 oder Anspruch 2, wobei die Mikrokapseln eine durchschnittliche Teilchengrösse von bis 150 $\mu$ aufweisen.

4. Mikrokapseln nach einem der Ansprüche 1 bis 3, in welchen das Insektizid Methomyl oder Oxamyl ist.

5. Mikrokapseln nach einem der Ansprüche 1 bis 4, in welchen der Kern ein Methylenchloridlösliches inertes Polymeres in einer Menge bis zu etwa 30 Gew.-% des Mikrokapsel-Gesamtgewichtes enthält.

6. Mikrokapseln nach Anspruch 5, in welchen das inerte Polymere ausgewählt ist unter Polymethylmethyacrylat und Polystyrol.

7. Insektizide Zusammensetzung, welche Mikrokapseln nach einem der Ansprüche 1 bis 6 in Mischung mit einem nicht-eingekapselten Insektizid in einem Verhältnis von 1:10 bis 1:1 umfasst.

8. Zusammensetzung nach Anspruch 7, in welcher das nichteingekapselte Insektizid Methomyl ist.

9. Zusammensetzung nach einem der vorangegangenen Ansprüche, umfassend 10 bis 99 Gew.-% an in Anspruch 1 definierten Mikrokapseln und wenigstens eine Komponente von (a) 1% bis 20% oberflächenaktive(s) Mittel und (b) 9 bis 99 Gew.-% feste(s) oder flüssige(s), inerte(s) Verdünnungsmittel, wobei sämtliche Prozentangaben auf das Gewicht bezogen sind.

10. Verfahren zur Herstellung von Mikrokapseln nach Anspruch 1, umfassend die Stufen (a) Auflösen von Methomyl, Oxamyl oder einer Mischung von Methomyl und einem Insektizid, ausgewählt aus der Gruppe Oxamyl, Aldicarb, Diflubenzuron, Chlordimeform, Parathion-Methyl, Parathion, EPN, Fenvalerat, Permethrin, Decamethrin, Cypermethrin, Carbaryl und Leptophos in Methylenchlorid, das Polyisocyanat oder eine Mischung von einem Polyisocyanat und Diisocyanat enthält, (b) Emulgieren der Lösung in eine gekühlte, wässerige Lösung eines oberflächenaktiven Mittel, (c) Zugeben eines Diamins oder Polyamins oder einer Mischung der beiden zur Bildung einer einkapselnden Hülle aus vernetztem Polyharnstoff um die Tröpfchen der emulgierten Lösung herum, und (d) Entfernen des Methylenchlorids.

11. Verfahren nach Anspruch 10, bei welchem die Methylenchloridlösung in Stufe (a) Diisocyanat zusätzlich zu Polyisocyanat enthält und eine Mischung von Diamin und Polyamin in Stufe (c) zu der Emulsion hinzugegeben wird.

12. Verfahren nach Anspruch 10 oder Anspruch 11, bei welchem die Konzentration an Polyisocyanat 10 bis 25 Mol-%, bezogen auf das Diisocyanat, und die Konzentration an Polyamin 15 bis 25 Mol-%, bezogen auf das gesamte Amin, beträgt.

13. Verfahren nach einem der Ansprüche 10 bis 12, bei welchem sowohl das Diisocyanat und auch das Polyisocyanat aromatische Isocyanate sind.

14. Verfahren nach einem der Ansprüche 10 bis 13, bei welchem das Diisocyanat 2,4-Toluoldiisocyanat und das Polyisocyanat Polymethylenpolyphenylisocyanat sind.

15. Verfahren nach einem der Ansprüche 10 bis 14, bei welchem das Diamin Äthylendiamin und das Polyamin Diäthylentriamin sind.

16. Verfahren nach einem der Ansprüche 10 bis 15, bei welchem die Reaktionstemperatur 0 bis 35°C beträgt.

17. Verfahren zur Bekämpfung eines Insektenschädlings durch Anwendung einer wirksamen Menge einer insektiziden Zusammensetzung am Ort des genannten Schädlings dadurch gekennzeichnet, dass die genannte insektizide Zusammensetzung Mikrokapseln nach einem der Ansprüche 1 bis 9 umfasst.